# EUROPEAN PATENT SPECIFICATION

(11) **EP 1 071 221 B1**
(45) Date of publication and mention of the grant of the patent: **30.08.2006**
(21) Application number: 99305867.6
(22) Date of filing: 23.07.1999
(51) Int. Cl.: H04B 1/16, H04H 1/00

(54) **Method to reduce the power consumption of radio receiver**
Verfahren zur Reduzierung der Leistungsaufnahme eines Funkemfängers
Méthode de reduction de la consommation d'énergie d'un récepteur radio

(43) Date of publication of application: 24.01.2001
(73) Proprietor: MATSUSHITA ELECTRIC INDUSTRIAL CO., LTD., Kadoma-shi, Osaka 571-8501 (JP)
(72) Inventor: Wong, Danny, Wokingham, Berkshire, RG41 3BW (GB)
(74) Representative: Dawson, Elizabeth Ann

(56) References cited:
- WO-A-99/31811
- US-A- 5 757 782
- HUISKEN ET AL: "A power-efficient single-chip OFDM demodulator and channel decoder for multimedia broadcasting" 1998 IEEE INTERNATIONAL SOLID-STATE CIRCUITS CONFERENCE, ISSCC, 5 - 5 February 1998, pages 40-41, XP002125499 New York, USA

## Description

This invention relates to a method to reduce the power consumption of a radio receiver, and in particular a Digital Audio Broadcast radio receiver.

The European Digital Audio Broadcasting (DAB) standard (European Broadcast Union, Radio broadcast system: Digital audio broadcasting to mobile, portable and fixed receivers, ETS 300 401, revised July 1997) is growing in acceptance throughout the world as the replacement for conventional AM/FM radio broadcasting. A DAB transmission is based on Orthogonal Frequency Division Multiplex (OFDM) modulation. Instead of transmitting on a single carrier frequency, OFDM uses many carrier frequencies simultaneously. This results in a broadband signal with a low symbol (baud) rate. OFDM offers two clear advantages in a mobile reception environment:
1. When a few carrier frequencies are corrupted, they only represent a small proportion of the transmission. With forward error correction coding, very few errors can occur after decoding.
2. As the symbol duration is long, a majority of the reflected signals due to multipath propagation or multiple transmitters may constructively interfere and strengthen the main signal.

In the time domain, the DAB signal is delivered as frames that are made up of consecutive OFDM symbols. The number of OFDM symbols to make up a frame depends on the DAB transmission mode, i.e. the combination of the number of carrier frequencies and symbol duration. The modes specified by the DAB standard are given in the following table:

| DAB Mode | Number of carriers | Symbol duration (approximate) | Symbols per frame |
|---|---|---|---|
| I | 1536 | 1.25ms | 77 |
| II | 384 | 0.31ms | 77 |
| III | 192 | 0.16ms | 154 |
| IV | 768 | 0.62ms | 77 |

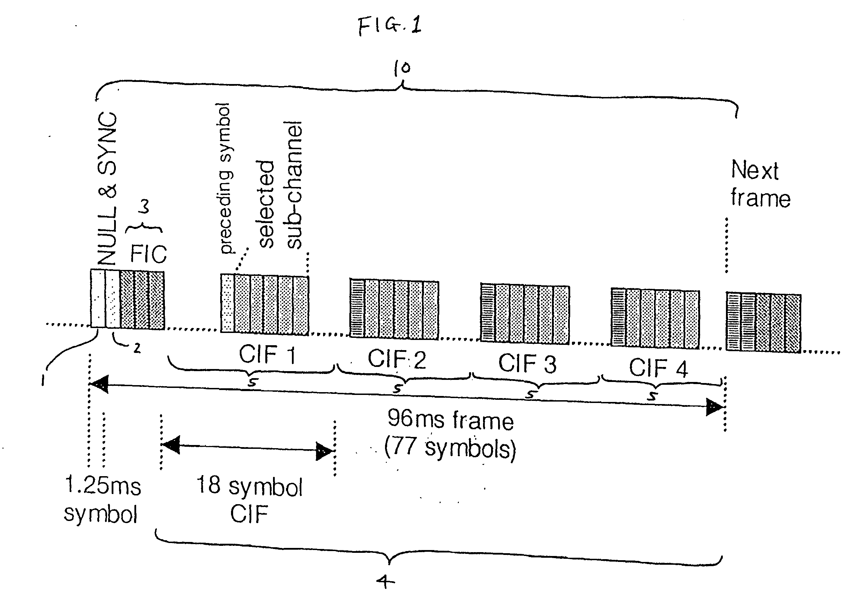

Irrespective of the transmission mode, all DAB frames have a common format. At the start, there is a synchronisation channel, within which there are the NULL and Phase Reference (denoted by SYNC) symbols for both coarse and fine time/frequency synchronisation. Then follows the Fast Information Channel (FIC) which holds a continuously updated directory of the contents of the rest of the frame, the Main Service Channel (MSC). The MSC forms the majority of the frame and it contains the payload of audio and data services occupying sub-channels. The organisation of the MSC is such that the information bits of each sub-channel would map onto a number of consecutive OFDM symbols. The MSC can be further divided into Common Interleaved Frames (CIF). An example DAB frame in mode I is given in Fig. 1.

An audio sub-channel usually occupies less than 20% of the OFDM symbols in a typical frame. For example, the BBC's DAB transmission carries at least six audio sub-channels.

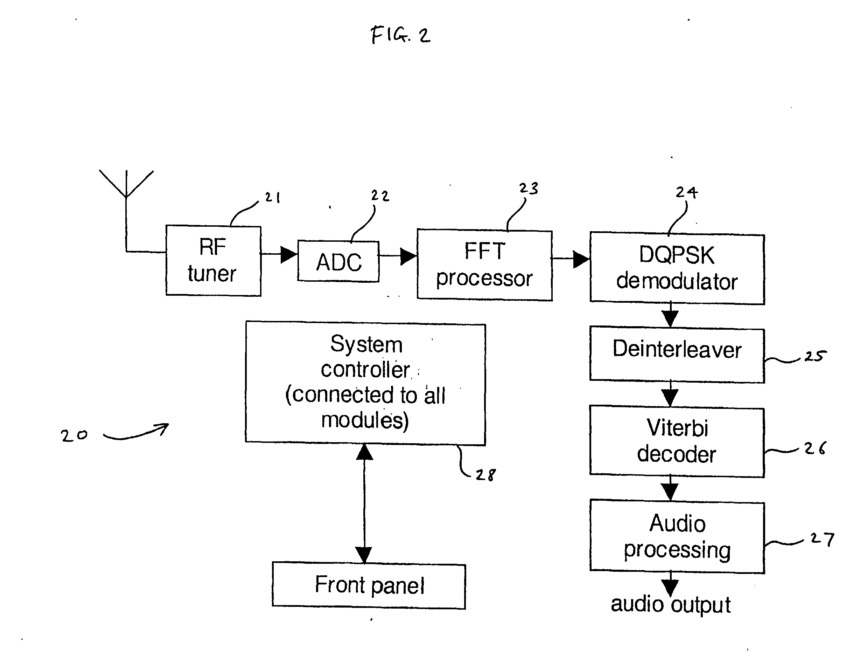

The architecture of a simplified DAB receiver 20, which might be used to recover the audio and data services in a DAB transmission, is shown in Fig. 2.

The RF tuner 21 down-converts the broadcast signal so that it can be sampled by the Analogue-to-Digital Converter (ADC) 22. Individual frequency components within each symbol of the digitised broadband signal are extracted using Fast Fourier Transform (FFT) in the FFT processor 23. These resolved frequency components are then decoded in three steps to remove the channel protection coding, which consists of Differential Quadrature Phase Shift Keying (DQPSK), time-and-frequency interleaving, and convolutional coding. The decoding correspondingly takes place in the DQPSK demodulator 24, deinterleaver 25 and Viterbi decoder 26. For audio sub-channels, the data is further decompressed with a MPEG audio decoder 27.

In many DAB receiver implementations, a number of the functional blocks shown are integrated on the same integrated circuit. However, invariably the RF tuner 21 remains an external block. Typically it is powered continuously and may consume up to 3W. Comparatively speaking, the rest of the DAB receiver circuitry (audio amplifier excepted) consumes less than 1W of power.

US 5392457 discloses a battery saving method for a communication receiver, in which the power supply to the receiver is suspended when it is detected that the address portion of a coded message signal does not correspond to the designated address of the receiver. By this method, the remainder of the frame is not received, and power is saved when a message is not intended for a particular receiver. However, in DAB receivers each frame will contain data relevant to the sub-channels selected by the user, even though this relevant data may form only a small portion of the frame. In addition, there exists the complication that the user may select any of various sub-channels, and that the location of a given sub-channel within the frame may change.

WO 99/31811 A discloses a power saving protocol for a wireless telephone system comprising a base unit having a base transceiver, and one or more wireless handsets, each handset comprising a handset transceiver. Each handset establishes a time-division multiple access (TDMA) link over a shared RF channel with the base unit via the base transceiver in accordance with a TDMA epoch, which allocates exclusive data and audio packet time slots to each handset. Each handset powers on its transceiver during its respective predetermined data and audio packet time slots as necessary to synchronize with the base unit using synchronization data transmitted with a data packet, to detect incoming call data transmitted with a data packet, or to transmit and receive audio information over the TDMA link. The handset powers off its transceiver otherwise during the epoch to minimize handset power use.

Huisken et al: "A power efficient single-chip OFDM demodulator and channel decoder for multimedia broadcasting", 1998 IEEE International Solid-State Circuits Conference (5 February 1998) discloses an arrangement in which program selection is performed prior to de-interleaving of a DAB channel, allowing the use of a reduced capacity channel decoder using less de-interleaver memory, and resulting in reduced power dissipation.

One aspect of the present invention provides a method for reducing the power consumption of a broadcast radio receiver comprising a tuner for receiving a modulated signal and means for demodulating the received signal, the signal being transmitted in the form of transmission frames, each frame comprising a data portion and a configuration portion which contains information regarding the location of data within the data portion,
wherein power is supplied to the tuner to allow reception of the configuration portion of each frame, and the supply of power to the tuner is modulated in response to the data location information contained in the configuration portion
to enable reception of selected data within the data portion of the frame.

In a preferred embodiment, the tuner is completely or partially powered down during at least a part of the data portion which does not contain selected data, and full power is supplied to the tuner during the remainder of each frame. In other words, during portions of the frame which do not contain required information, power may be conserved by reducing the supply of power to the tuner, either fully or partially.

Power is preferably additionally supplied to the tuner for a predetermined period preceding and/or following portions of the frame containing the selected data. This period may be a "guard period" allowing for the transient settling of the tuner.

When used with a DAB transmission as described previously, the configuration portion may comprise the FIC and the NULL and SYNC symbols. The data portion may correspond to the MSC.

Another aspect of the invention provides a radio receiver for receiving a modulated broadcast signal transmitted in the form of transmission frames, each frame comprising a data portion and a configuration portion which contains information regarding the location of data within the data portion, the receiver comprising:
a tuner for receiving the modulated signal,
means for demodulating the received signal,
means for supplying power to the tuner to allow reception of the configuration portion of each frame, and
means for modulating the supply of power to the tuner in response to the information contained in the configuration portion of each frame, to enable reception of selected data within the data portion of the frame.

Additional preferred features of the invention are described in the annexed sub-claims 3 to 14 and 16 to 21.

A specific embodiment of the invention will now be described by way of example with reference to the accompanying drawings in which:
Figure 1 shows the composition of typical DAB frame; and
Figure 2 shows schematically the architecture of a DAB receiver.

As described previously, the DAB frame illustrated in Figure 1 is in the form of a mode I frame 10 in accordance with the European Broadcast Union (EBU) DAB standard. The frame consists of 77 consecutive symbols, comprising a NULL symbol 1, a Phase Reference symbol (SYNC) 2, the FIC 3 and the MSC 4. Other transmission Modes II, III, IV as described above are also specified in the standard. The MSC 4 comprises one or more Common Interleaved Frames (CIF) 5. The mode I DAB frame of Figure 1 has the MSC divided into four CIFs. Within the MSC, the basic addressable unit is the Capacity Unit (CU) representing 64 data bits. Each CIF holds 864 CUs. CU addresses are specified from 0 to 863. If the location of the first symbol in the DAB frame (i.e. the null symbol) is given the index 0, the location of the first MSC symbol for each mode is given in the table below.

| DAB mode | Symbols per frame | Number of FICsymbols | Index of first MSC symbol | CIFs per frame | CUs per symbol |
|---|---|---|---|---|---|
| I | 77 | 3 | 5 | 4 | 48 |
| II | 77 | 3 | 5 | 1 | 12 |
| III | 154 | 8 | 10 | 1 | 6 |
| IV | 77 | 3 | 5 | 2 | 24 |

For each audio or data service carried by the DAB frame within the MSC, the data is distributed in consecutive CUs (positioned in successive symbols within the same CIF). In modes I and IV, there is more than one CIF per frame, and the data for a particular service is contained in successive symbol bursts with no interleave. Consequently, CUs belonging to a particular audio or data service occur in 4 or 2 bursts within mode I and IV frames respectively. Figure 1 shows a selected sub-channel appearing in the first CIF, and the subsequent bursts relating to the same sub-channel, which occur in the remaining three CIFs.

In accordance with a preferred embodiment of the invention, where a particular sub-channel is selected, the tuner of the radio receiver is only powered during the time periods necessary to ensure reception of the selected sub-channel. The power supply to the tuner may be switched off during portions of the frame containing symbols relating to other sub-channels, resulting in a power saving.

Figure 1 shows all the symbols which must be demodulated in order to allow the full decoding of a selected sub-channel. These are the NULL, SYNC and FIC symbols, the MSC symbols occupied by the selected sub-channel, and any OFDM symbol preceding a selected MSC symbol where differential (DQPSK) encoding is used. In addition, the tuner may be switched on before the beginning of a required symbol, to allow for the transient settling period of the tuner. Such a "guard period" may also be employed before the tuner is switched off at the end of a symbol, to avoid the loss of data.

In the example shown in Figure 1, assuming the turn-on transient-settling period is negligibly small, the RF tuner is only switched on for 29 symbols out of 77 in the frame, ie. a 62% power reduction compared to being continuously powered.

The start and end CU addresses of any given DAB sub-channel are specified in the FIC. These addresses can be changed dynamically under the procedures for multiplex reconfiguration given in the EBU standard, such that a given sub-channel will not always appear at the same location in different frames. Typically, a DAB broadcast changes its configuration a few times everyday.

The FIC is structured such that it contains separate CU address information for each CIF within the DAB frame. In order to effectively control the supply of power to the tuner in response to this information, it is therefore necessary to determine which symbols in the overall DAB frame correspond to a particular CU address within a given CIF.

Using the mode I DAB frame of Figure 1 as an example, the frame is made up of 77 symbols (numbered 0 to 76), comprising a NULL symbol, a SYNC symbol, three FIC symbols and four consecutive CIFs, each 18 symbols in length.

The FIC may specify that a particular sub-channel is located at, for example, CU addresses 100 to 319 of the first CIF in the frame, and also at CU addresses 100 to 319 in each of the three other CIFs respectively. This information can then be converted into power on times for the tuner, as follows.

The first five symbols of the mode I DAB frame (symbols 0-4) comprise the NULL, SYNC, and FIC symbols, as stated previously, and the tuner must be powered during this period. The first symbol of the first CIF is therefore the sixth symbol of the DAB frame (symbol number 5). Since there are 18 symbols in each CIF, and each symbol comprises 48 CUs, the first CIF contains 864 CUs located at symbols 5-22 of the DAB frame. Symbol 5 of the frame therefore corresponds to CU addresses 0 to 47 of the first CIF, symbol 6 corresponds to CU addresses 48 to 95, and so on. Therefore, the symbols relating to the given sub-channel in the first CIF are symbols 7 to 11, since these correspond to CU addresses 96 to 335 within the first CIF.

The second CIF occupies symbols 23 to 40 of the DAB frame, the third CIF occupies symbols 41-58, and the fourth CIF occupies symbols 59 to 76. Therefore, using the same principles as for the first CIF, CU addresses 100 to 319 within each of these CIFs correspond to symbols 25-29, 43-47 and 61-65, respectively, within the DAB frame.

Thus, where the selected sub-channel occupies CU addresses 100-319 of each CIF in a mode I DAB frame, it can be seen that the tuner must be powered to receive symbols 0-4, 7-11, 25-29, 43-47 and 61-65 within the frame. As shown in Figure 1, the symbol preceding each block of required symbols must also be received where differential encoding is employed. In this example, these extra symbols are numbers 6, 24, 42 and 60. Therefore a total of 29 out of the 77 symbols of each frame are required in this particular example, although this may vary greatly depending on the size of the sub-channel and the DAB mode used.

Following from the example above, the formulae to determine the symbol location holding a particular CU are given below for each of the four DAB transmission modes. (Null symbol has index 0. CU address is denoted by C.)

### Mode I

As there are four CIFs, the CU address within a CIF maps to four symbols, depending on which CIF is referred to:
C/48+5, C/48+23, C/48+41 and C/48+59

### Mode II

The CU address maps to only one symbol: C/12+5

### Mode III

The CU address maps to only one symbol: C/6+10

### Mode IV

The CU address maps to two symbols: C/24+5 and C/24+41

Using the above formulae, the symbols containing the CUs belonging to any selected sub-channel can be determined. As the QPSK symbols are differentially coded, the symbol preceding the one containing the start CU must also be demodulated.

The architecture of a DAB receiver is shown schematically in Figure 2, and has been described previously. In the receiver according to an embodiment of the invention, the system controller includes means for controlling the supply of power to the tuner in response to the contents of the FIC. The functional blocks in Figure 2 for processing the signal received by the tuner (analogue-to-digital converter, FFT processor, etc.) may be integrated as software within a single component.

The power supply to the external tuner may be controlled by a signal that is approximately synchronous to the symbol rate of the DAB transmission (allowing for any guard period), particularly where the system controller is an external component. Alternatively, where an on-chip system controller is used, a pin should be reserved to bring out this signal. A programmable register may also be used to allow for different switch-on transient times for different RF tuners. During the off periods of the control signal, the RF tuner may be partially or completely powered down. By modulating the power supply to the RF tuner, the overall power consumption of the DAB receiver can be reduced.

In a preferred embodiment, a significant power saving can be achieved through the use of such a control signal to turn off the tuner alone. Similar signals could be provided to control the power supply to each functional block, thereby providing greater savings. However, the power reduction achieved by the use of such further signals is less significant, for a number of reasons. Firstly, the power reduction benefit is marginal for the extra complexity; secondly, alternative power saving techniques, such as the use of a lower clock rate, may be employed; and finally, separate control signals are not required where the various functions are integrated as software into the same unit.

The realisable power-saving is greatest when part of the multiplex is not required by the user. In DAB modes II, III and IV the proportion of time spent on the FIC and transient-settling period is greater, and the power saving benefit is somewhat reduced.

It is desirable for the RF tuner to be able to recover from complete power-down in the shortest time possible in a power-efficient manner. Partial power-down and longer switch-on transient times will reduce the power saving.

Embodiments of the invention may be employed in various applications, examples of which are given below:
1. A receiver stand-by mode that monitors the FIC and possibly one small data sub-channel. In this mode the receiver would operate similarly to a pager.
2. Portable receivers for audio information only that never or seldom require all symbols to be demodulated.

## Claims

1. A method for reducing the power consumption of a broadcast radio receiver (20) comprising a tuner (21) for receiving a modulated signal and means for demodulating (24) the received signal, the signal being transmitted in the form of transmission frames (10), each frame comprising a data portion (4) and a configuration portion (1, 2, 3) which contains information regarding the location of data within the data portion,
wherein power is supplied to the tuner to allow reception of the configuration portion of each frame, and the supply of power to the tuner is modulated in response to the data location information contained in the configuration portion to enable reception of selected data within the data portion of the frame.

2. A method according to claim 1, wherein the tuner (21) is completely or partially powered down during at least a part of the data portion (4) which does not contain selected data, and full power is supplied to the tuner during the remainder of each frame (10).

3. A method according to claim 2, wherein the tuner (21) is fully powered to allow demodulation only of the configuration portion (1, 2, 3) and selected parts of the data portion (4).

4. A method according to claim 2 or 3, wherein full power is additionally supplied to the tuner (21) for a predetermined period immediately preceding and/or following portions of the frame (10) containing the selected data.

5. A method according to any of claims 2 to 4, wherein the selected data corresponds to a selected audio and/or data service.

6. A method according to claim 5, wherein the service is selected by the user.

7. A method according to any of claims 2 to 6, wherein the configuration portion includes a synchronisation portion (1, 2).

8. A method according to any of claims 2 to 7, wherein the tuner (21) is fully powered for a discrete time interval following the configuration portion (1, 2, 3) of the frame (10).

9. A method according to any of claims 2 to 8, wherein the tuner (21) is fully powered for a plurality of discrete time intervals following the configuration portion (1, 2, 3) of the frame (10).

10. A method according to claim 8 or 9, wherein the duration and/or start time of the discrete time interval(s) is/are variable.

11. A method according to claim 10, wherein the duration and/or start time of the discrete time interval(s) is/are variable in response to the information contained in the configuration portion (1, 2, 3) of the frame (10).

12. A method according to any of claims 2 to 11, wherein each transmission frame (10) comprises a series of Orthogonal Frequency Division Multiplex (OFDM) symbols.

13. A method according to claim 12, wherein the configuration portion comprises a NULL symbol (1), a Phase Reference (SYNC) symbol (2) and directory symbols (3) which contain information regarding the location of data within the data portion (4).

14. A method according to claim 13, wherein the tuner is fully powered to allow demodulation only of the NULL symbol (1), Phase Reference (SYNC) symbol (2), directory symbols (3), symbols containing selected data and the symbol preceding each symbol or group of symbols containing selected data.

15. A radio receiver (20) for receiving a modulated broadcast signal transmitted in the form of transmission frames (10), each frame comprising a data portion (4) and a configuration portion (1, 2, 3) which contains information regarding the location of data within the data portion, the receiver comprising:
a tuner (21) for receiving the modulated signal,
means (24) for demodulating the received signal,
means for supplying power to the tuner to allow reception of the configuration portion of each frame, and
means (28) for modulating the supply of power to the tuner in response to the information contained in the configuration portion of each frame, to enable reception of selected data within the data portion of the frame.

16. A radio receiver according to claim 15, comprising means (28) for completely or partially powering down the tuner (21) during at least a part of the data portion (4) which does not contain selected data, and supplying full power to the tuner during the remainder of each frame (10).

17. A radio receiver according to claim 16, comprising means (28) for supplying full power to the tuner (21) during one or more discrete time intervals following the configuration portion (1, 2, 3) of the frame (10).

18. A radio receiver according to claim 17, comprising means (28) for varying the duration(s) and/or start time(s) of the discrete time interval(s).

19. A radio receiver according to claim 18, wherein the means for varying the duration(s) and/or start time(s) are responsive to the information contained in the configuration portion (1, 2, 3) of the frame (10).

20. A radio receiver according to any of claims 15 to 19, comprising means (28) for generating a control signal for modulating the supply of power to the tuner (21).

21. A radio receiver according to any of claims 15 to 20, wherein the modulated signal is a Digital Audio Broadcast signal.

## Patentansprüche

1. Verfahren zum Reduzieren des Stromverbrauchs eines Rundfunkempfängers (20), der einen Tuner (21) zum Empfangen eines modulierten Signals sowie eine Einrichtung zum Demodulieren (24) des empfangenen Signals umfasst, wobei das Signal in der Form von Sende-Rahmen (10) gesendet wird und jeder Rahmen einen Datenabschnitt (4) sowie einen Konfigurationsabschnitt (1, 2, 3) umfasst, der Informationen bezüglich der Position von Daten innerhalb des Datenabschnitts enthält,
wobei dem Tuner Strom zugeführt wird, um Empfang des Konfigurationsabschnitts jedes Rahmens zu ermöglichen, und die Zufuhr von Strom zu dem Tuner in Reaktion auf die in dem Konfigurationsabschnitt enthaltenen Datenpositionsinformationen moduliert wird, um Empfang ausgewählter Daten in dem Datenabschnitt des Rahmens zu ermöglichen.

2. Verfahren nach Anspruch 1, wobei während wenigstens eines Teils des Datenabschnitts (4), der keine ausgewählten Daten enthält, vollständige oder teilweise Stromabschaltung des Tuners (21) durchgeführt wird, und dem Tuner während des verbleibenden Teils jedes Rahmens (10) vollständig Strom zugeführt wird.

3. Verfahren nach Anspruch 2, wobei der Tuner (21) vollständig mit Strom versorgt wird, um Demodulation lediglich des Konfigurationsabschnitts (1, 2, 3) und ausgewählter Teile des Datenabschnitts (4) zu gestatten.

4. Verfahren nach Anspruch 2 oder 3, wobei dem Tuner (21) über eine vorgegebene Periode unmittelbar vor und/oder nach Abschnitten des Rahmens (10), die die ausgewählten Daten enthalten, zusätzlich vollständig Strom zugeführt wird.

5. Verfahren nach einem der Ansprüche 2 bis 4, wobei die ausgewählten Daten einem ausgewählten Audio- und/oder Datendienst entsprechen.

6. Verfahren nach Anspruch 5, wobei der Dienst von dem Benutzer ausgewählt wird.

7. Verfahren nach einem der Ansprüche 2 bis 6, wobei der Konfigurationsabschnitt einen Synchronisationsabschnitt (1, 2) enthält.

8. Verfahren nach einem der Ansprüche 2 bis 7, wobei der Tuner (21) über ein separates Zeitintervall nach dem Konfigurationsabschnitt (1, 2, 3) des Rahmens (10) vollständig mit Strom versorgt wird.

9. Verfahren nach einem der Ansprüche 2 bis 8, wobei der Tuner (21) über eine Vielzahl separater Zeitintervalle nach dem Konfigurationsabschnitt (1, 2, 3) des Rahmens (10) vollständig mit Strom versorgt wird.

10. Verfahren nach Anspruch 8 oder 9, wobei die Dauer und/oder Anfangszeit des/der separaten Zeitintervalle/s verändert werden kann/können.

11. Verfahren nach Anspruch 10, wobei die Dauer und/oder Anfangszeit des/der separaten Zeitintervalle/s in Reaktion auf die in dem Konfigurationsabschnitt (1, 2, 3) des Rahmens (10) enthaltenen Informationen verändert werden kann/können.

12. Verfahren nach einem der Ansprüche 2 bis 11, wobei jeder Sende-Rahmen (10) eine Reihe von OFDM(Orthogonal Frequency Division Multiplex)-Symbolen umfasst.

13. Verfahren nach Anspruch 12, wobei der Konfigurationsabschnitt ein NULL-Symbol (1), ein Phasen-Bezugs(SYNC)-Symbol (2) und Verzeichnis-Symbole (3) umfasst, die Informationen bezüglich der Position von Daten innerhalb des Datenabschnitts (4) enthalten.

14. Verfahren nach Anspruch 13, wobei der Tuner vollständig mit Strom versorgt wird, um Demodulation nur des NULL-Symbols (1), des Phasen-Bezugs (SYNC)-Symbols (2), von Verzeichnis-Symbolen (3), Symbolen, die ausgewählte Daten enthalten und des Symbols zu ermöglichen, das jedem Symbol oder jeder Gruppe von Symbolen vorangeht, die ausgewählte Daten enthalten.

15. Funkempfänger (20) zum Empfangen eines modulierten Rundfunksignals, das in der Form von Sende-Rahmen (10) gesendet wird, wobei jeder Rahmen einen Datenabschnitt (4) und einen Konfigurationsabschnitt (1, 2, 3) umfasst, der Informationen bezüglich der Position von Daten innerhalb des Datenabschnitts enthält, und der Empfänger umfasst:
einen Tuner (21) zum Empfangen des modulierten Signals,
eine Einrichtung (24) zum Demodulieren des empfangenen Signals,
eine Einrichtung zum Zuführen von Strom zu dem Tuner, um Empfang des Konfigurationsabschnitts jedes Rahmens zu gestatten, und
eine Einrichtung (28) zum Modulieren der Zufuhr von Strom zu dem Tuner in Reaktion auf die in dem Konfigurationsabschnitt jedes Rahmens enthaltenen Informationen, um Empfang ausgewählter Daten innerhalb des Datenabschnitts des Rahmens zu gestatten.

16. Funkempfänger nach Anspruch 15, der eine Einrichtung (28) für vollständige oder teilweise Stromabschaltung des Tuners (21) während wenigstens eines Teils des Datenabschnitts (4), der keine ausgewählte Daten enthält, und zum Zuführen von vollständigem Strom zu dem Tuner während des verbleibenden Teils jedes Rahmens (10) umfasst.

17. Funkempfänger nach Anspruch 16, der eine Einrichtung (28) zum Zuführen von vollständigem Strom zu dem Tuner (21) während eines oder mehrerer separater Zeitintervalle nach dem Konfigurationsabschnitt (1, 2, 3) des Rahmens (10) umfasst.

18. Funkempfänger nach Anspruch 17, der eine Einrichtung (28) zum Verändern der Dauer und/oder Anfangszeit/en des/der separaten Zeitintervalle/s umfasst.

19. Funkempfänger nach Anspruch 18, wobei die Einrichtung zum Verändern der Dauer und/oder Anfangszeit/en auf die in dem Konfigurationsabschnitt (1, 2, 3) des Rahmens (10) enthaltenen Informationen anspricht.

20. Funkempfänger nach einem der Ansprüche 15 bis 19, der eine Einrichtung (28) zum Erzeugen eines Steuersignals zum Modulieren der Zufuhr von Strom zu dem Tuner (21) umfasst.

21. Funkempfänger nach einem der Ansprüche 15 bis 20, wobei das modulierte Signal ein DAB (Digital Audio Broadcast)-Signal ist.

## Revendications

1. Procédé de réduction de la consommation d'énergie d'un récepteur de radiodiffusion (20) comprenant un tuner (21) destiné à recevoir un signal modulé et un moyen destiné à démoduler (24) le signal reçu, le signal étant transmis sous la forme de trames de transmission (10), chaque trame comprenant une partie de données (4) et une partie de configuration (1, 2, 3) qui contient des informations relatives à l'emplacement de données dans la partie de données,
dans lequel une énergie est fournie au tuner afin de permettre la réception de la partie de configuration de chaque trame, et l'alimentation en énergie du tuner est modulée en réponse aux informations d'emplacements de données contenues dans la partie de configuration afin de permettre la réception de données sélectionnées dans la partie de données de la trame.

2. Procédé selon la revendication 1, dans lequel le tuner (21) est complètement ou partiellement mis hors tension pendant au moins une partie de la partie de données (4) qui ne contient pas les données sélectionnées, et une pleine puissance est fournie au tuner pendant le reste de chaque trame (10).

3. Procédé selon la revendication 2, dans lequel le tuner (21) est entièrement alimenté afin de permettre la démodulation de la partie de configuration (1, 2, 3) et des parties sélectionnées de la partie de données (4) uniquement.

4. Procédé selon la revendication 2 ou 3, dans lequel une pleine puissance est en outre fournie au tuner (21) pendant une période de temps prédéterminée juste avant et/ou après les parties de la trame (10) contenant les données sélectionnées.

5. Procédé selon l'une quelconque des revendications 2 à 4, dans lequel les données sélectionnées correspondent à un service audio et/ou de données sélectionné.

6. Procédé selon la revendication 5, dans lequel le service est sélectionné par l'utilisateur.

7. Procédé selon l'une quelconque des revendications 2 à 6, dans lequel la partie de configuration comprend une partie de synchronisation (1, 2).

8. Procédé selon l'une quelconque des revendications 2 à 7, dans lequel le tuner (21) est entièrement alimenté pendant un intervalle de temps discret suivant la partie de configuration (1, 2, 3) de la trame (10).

9. Procédé selon l'une quelconque des revendications 2 à 8, dans lequel le tuner (21) est entièrement alimenté pendant une pluralité d'intervalles de temps discrets suivant la partie de configuration (1, 2, 3) de la trame (10).

10. Procédé selon la revendication 8 ou 9, dans lequel la durée et/ou le moment de début du/des intervalle(s) de temps discret(s) est/sont variable(s).

11. Procédé selon la revendication 10, dans lequel la durée et/ou le moment de début du/des intervalle(s) de temps discret(s) est/sont variable(s) en réponse aux informations contenues dans la partie de configuration (1, 2, 3) de la trame (10).

12. Procédé selon l'une quelconque des revendications 2 à 11, dans lequel chaque trame de transmission (10) comprend une série de symboles à multiplexage de fréquence orthogonal (OFDM).

13. Procédé selon la revendication 12, dans lequel la partie de configuration comprend un symbole NUL (1), un symbole de référence de phase (SYNC) (2) et des symboles de répertoire (3) qui contiennent des informations relatives à l'emplacement de données dans la partie de données (4).

14. Procédé selon la revendication 13, dans lequel le tuner est entièrement alimenté afin de permettre la démodulation du symbole NUL (1), du symbole de référence de phase (SYNC) (2), des symboles de répertoire (3), des symboles contenant les données sélectionnées et du symbole précédant chaque symbole ou groupe de symboles contenant les données sélectionnées.

15. Récepteur radio (20) destiné à recevoir un signal de diffusion modulé transmis sous la forme de trames de transmission (10), chaque trame comprenant une partie de données (4) et une partie de configuration (1, 2, 3) qui contient des informations relatives à l'emplacement de données dans la partie de données, le récepteur comprenant :
un tuner (21) destiné à recevoir le signal modulé,
un moyen (24) destiné à démoduler le signal reçu,
un moyen destiné à fournir une énergie au tuner afin de permettre la réception de la partie de configuration de chaque trame, et
un moyen (28) destiné à moduler l'alimentation du tuner en réponse aux informations contenues dans la partie de configuration de chaque trame, afin de permettre la réception de données sélectionnées dans la partie de données de la trame.

16. Récepteur radio selon la revendication 15, comprenant un moyen (28) destiné à mettre hors tension complètement ou partiellement le tuner (21) pendant au moins une partie de la partie de données (4) qui ne contient pas les données sélectionnées, et à fournir une pleine puissance au tuner pendant le reste de chaque trame (10).

17. Récepteur radio selon la revendication 16, comprenant un moyen (28) destiné à fournir une pleine puissance au tuner (21) pendant un ou plusieurs intervalle(s) de temps discret(s) suivant la partie de configuration (1, 2, 3) de la trame (10).

18. Récepteur radio selon la revendication 17, comprenant un moyen (28) destiné à faire varier la/les durée(s) et/ou le(s) moment(s) de début du/des intervalle(s) de temps discret(s).

19. Récepteur radio selon la revendication 18, dans lequel le moyen destiné à faire varier la/les durée(s) et/ou le(s) moment(s) de début répond aux informations contenues dans la partie de configuration (1, 2, 3) de la rame (10).

20. Récepteur radio selon l'une quelconque des revendications 15 à 19, comprenant un moyen (28) destiné à générer un signal de commande afin de moduler l'alimentation du tuner (21).

21. Récepteur radio selon l'une quelconque des revendications 15 à 20, dans lequel le signal modulé est un signal de diffusion audio numérique.
